# EUROPÄISCHE PATENTSCHRIFT

(11) **EP 3 840 901 B1**
(45) Veröffentlichungstag und Bekanntmachung des Hinweises auf die Patenterteilung: **14.05.2025**
(21) Anmeldenummer: 19753057.9
(22) Anmeldetag: 12.08.2019
(51) Int. Cl.: B23B 29/034, B23B 51/10, B23C 3/05, B23C 5/24

(54) **ZERSPANUNGSWERKZEUG**
CUTTING TOOL
OUTIL D'USINAGE PAR ENLÈVEMENT DE COPEAUX

(30) Priorität: 21.08.2018 DE 102018214123
(43) Veröffentlichungstag der Anmeldung: 30.06.2021
(73) Patentinhaber: Gühring KG, 72458 Albstadt (DE)
(72) Erfinder: MATHEIS, Klaus, 88605 Sauldorf/Rast (DE)
(74) Vertreter: Winter, Brandl - Partnerschaft mbB
(86) Internationale Anmeldenummer: PCT/EP2019/071542
(87) Internationale Veröffentlichungsnummer: WO 2020/038749

(56) Entgegenhaltungen:
- EP-A1- 0 126 432
- WO-A1-2010/104635
- WO-A1-2014/041130
- WO-A2-98/39127
- DE-A1- 1 752 498
- US-A- 3 332 130
- US-A- 4 353 669
- US-A- 5 217 333

## Beschreibung

Die vorliegende Erfindung befasst sich mit einem Zerspanungswerkzeug, bei dem der Schneideinsatz über eine Spannpratze an einem Grundkörper fixierbar ist.

Ein derartiges Zerspanungswerkzeug zeigt beispielsweise die EP 0 381 924 A2. Die EP 0 381 924 A2 schlägt vor, zur Fixierung eines Schneidansatzes an einem Grundkörper des Zerspanungswerkzeugs eine Spannpratze zu verwenden, die mittels einer Spannschraube gegen den Grundkörper gepresst wird und dabei mit einem auskragenden Endabschnitt gegen den Schneidansatz drückt, der dadurch flächig gegen eine Bodenfläche einer Ausnehmung im Grundkörper gespannt wird. Der Nachteil dieser Anordnung besteht darin, dass eine Feinjustierung des Schneidansatzes nicht möglich ist.

In vergleichbarer, diesen Gegenstand weiterbildender Weise offenbart die DE 101 44 923 A1 ein Zerspanungswerkzeug, bei dem ein Schneideinsatz, im Besonderen eine Wendeschneidplatte, formschlüssig in einer Tasche einer relativ zu einem Grundkörper des Zerspanungswerkzeugs in axialer und radialer Richtung lageeinstellbaren Spannpratze aufgenommen ist. Die Spannpratze spannt den Schneideinsatz gegen eine Stützfläche am Grundkörper. Das Zerspanungswerkzeug gestattet bei einer insgesamt platzsparenden Gestaltung eine relativ einfache Fixierung und Lageeinstellung eines Schneideinsatzes über die Spannpratze am Grundkörper. Für einen Schneideinsatzwechsel ist die Spannpratze zu lockern oder zu lösen. Ein Schneideinsatzwechsel erfordert daher stets eine erneute Lageeinstellung der Spannpratze.

Die Druckschriften US 5 217 333 A, US 3 332 130 A, und EP 0 126 432 A1 zeigen jeweils ein Zerspanungswerkzeug mit einem sich entlang einer Längsmittelachse erstreckenden Grundkörper und einem am Grundkörper axial und/oder radial lageeinstellbar gehaltenen Schneideinsatz, der mittels einer Spannpratze spannbar ist. Der Schneideinsatz wird von einem am Grundkörper lageeinstellbar festgelegten Klemmhalter gehalten, der durch die gegen den Schneideinsatz drückende Spannpratze gegen den Grundkörper spannbar ist. Die Druckschriften US 4 353 669 A und WO 2014/041130 A1 zeigen jeweils ein Zerspanungswerkezug gemäß dem Oberbegriff des Anspruchs 1.

Der Erfindung liegt nun ausgehend von dem Zerspanungswerkzeug der US 4 353 669 A die Aufgabe zu Grunde, ein Zerspanungswerkzeug der eingangs beschriebenen Art derart weiterzubilden, dass bei einem Schneideinsatzwechsel die Anordnung eines Schneideinsatzes in einer vorab definierten Lage am Grundkörper ohne eine erneute Justierung gelingt.

Diese Aufgabe wird durch ein Zerspanungswerkzeug mit den Merkmalen des Anspruchs 1 gelöst. Bevorzugte Weiterbildungen sind Gegenstand abhängiger Ansprüche.

Analog dem aus der DE 101 44 923 A1 bekannten Zerspanungswerkzeug hat ein erfindungsgemäßes Zerspanungswerkzeug, das z.B. als Bohr-, Dreh-, Fräs-, Reibwerkzeug oder dergleichen ausgeführt sein kann, einen sich entlang einer Längsmittelachse erstreckenden Grundkörper und einem am Grundkörper axial und/oder radial lageeinstellbar gehaltenen Schneideinsatz, der mittels einer Spannpratze fixierbar ist.

Der Grundkörper kann in einer dem Fachmann an sich bekannten Weise einen Schaftabschnitt mit einem sog. HSK (kurz für: Hohlschaftkegel)-Schaft zum Ankuppeln an ein Modul eines modularen Werkzeugsystems oder an eine Maschinenspindel aufweisen. In diesem Fall kann der Grundkörper funktional in den Schaftabschnitt und einen axial anschließenden Schneidteil unterteilt werden, wobei der Schneideinsatz am Schneidteil angeordnet ist.

Im Unterschied zu dem aus der DE 101 44 923 A1 bekannten Zerspanungswerkzeug wird bei dem erfindungsgemäßen Zerspanungswerkzeug der Schneideinsatz über eine Spannpratze nicht unmittelbar gegen den Grundkörper gespannt, sondern über einen am Grundkörper lageeinstellbar festgelegten Klemmhalter Weil die axiale und/order radiale Lageeinstellung des Schneideinsatzes somit mittelbar über den am Grundkörper lageeinstellbar angeordneten Klemmhalter erfolgt, beschränkt sich die Funktion der Spannpratze auf die Spannfixierung des Schneideinsatzes (über den Klemmhalter) am Grundkörper. Dadurch ist es möglich, eine einmal durchgeführte Lageeinstellung des Klemmhalters auch dann beizubehalten, wenn zum Wechsel des Schneideinsatzes die Spannpratze gelockert oder gelöst wird. Das erfindungsgemäße Zerspanungswerkzeug zeichnet sich daher dadurch aus, dass die Funktion der axialen und/oder radialen Lageeinstellung und Festlegung des Klemmhalters am Grundkörper einerseits und die Funktion der Spannfixierung des Schneideinsatzes relativ zum Grundkörper andererseits getrennt gelöst sind. Der Schneideinsatz kann daher gewechselt werden, ohne eine erneute Lageeinstellung vornehmen zu müssen. Über die Spannpratze erfährt der davon unabhängig am Grundkörper angeordnete Klemmhalter eine zusätzliche kraftschlüssige Festlegung am Grundkörper.

Der Grundkörper weist erfindungsgemäß eine Aufnahmetasche auf, die den Klemmhalter in einer Richtung quer zur Längsmittelachse verschiebbar und in axialer Richtung verliersicher aufnimmt. Eine derart ausgestaltete Aufnahmetasche trägt zu einer einfachen Montage des Klemmhalters an den Grundkörper und daher einer Verkürzung der Rüstzeit bei.

In einer bevorzugten Ausführungsform ist die Spannpratze durch eine den Klemmhalter durchdringende Spannschraube mit dem Grundkörper verschraubt. Die Spannschraube dringt mit einem ausreichenden Spiel durch ein Loch im Klemmhalter, so dass der Klemmhalter zur axialen und/oder radialen Lageeinstellung gegenüber der Spannschraube in Grenzen verschiebbar ist. Wird die Spannschraube angezogen, drückt sie die Spannpratze auf den Schneideinsatz, der dadurch auf den Klemmhalter gedrückt wird, wodurch dieser auf eine grundkörperseitige Auflagefläche gedrückt wird. Somit werden die Spannpratze, der Schneideinsatz und der Klemmhalter durch die Spannschraube gegen den Grundkörper gedrückt und dadurch am Grundkörper fixiert. Wie später noch genauer erläutert wird, kann in der Spannpratze eine Kegelsenkung vorgesehen sein, die mit einer Kegelfläche am Kopf der Spannschraube zusammenwirkt und die Spannschraube relativ zur Spannpratze stets eindeutig positioniert. Dadurch wird in reproduzierbarer Weise eine Ausrichtung der Spannpratze gegenüber der durch Verschraubung am Grundkörper positionierten Spannschraube erreicht. Durch diese Maßnahmen spannt die Spannpratze den Schneideinsatz gegen den Klemmhalter.

Ein weiterer Vorteil des Einsatzes der Spannpratze besteht darin, dass der Schneideinsatz, wie z. B. eine Schneidplatte, insbesondere eine Wendeschneidplatte, keine zentrale Durchgangsbohrung mehr benötigt, um die Festlegung am Grundkörper zu bewerkstelligen. Es können damit auch kleinste Schneidplatten eingesetzt werden, die ansonsten durch einen zentralen Durchbruch zu sehr geschwächt würden. Die Beanspruchung des Schneideinsatzes, insbesondere einer eingesetzten Schneidplatte kann derart erfolgen, dass er am Klemmhalter großflächig anliegt. Kontaktspannungen können dadurch minimiert werden, was insbesondere dann von Vorteil ist, wenn extrem harte Schneidwerkstoffe, wie z. B. Hartmetall, Keramik-Werkstoffe oder Cermet-Werkstoffe Anwendung finden.

Die Aufnahmetasche kann eine sich in Verschieberichtung des Klemmhalters erstreckende, vorzugsweise ebene, Auflagefläche der Aufnahmetasche bilden, gegen die der Klemmhalter großflächig spannbar ist. Die Verschieberichtung kann parallel zu einer radialen und/oder axialen Richtung sein bzw. vektoriell gesehen als Addition von Richtungsvektoren verstanden werden, von denen einer radial und einer axial verläuft. Allerdings muss die Verschiebung nicht in einer Ebene stattfinden, in der die Längsmittelachse verläuft, sondern kann auch in einer Ebene parallel zu der Ebene stattfinden, die ein radialer Vektor und die Längsmittelachse aufspannen. Bei einer flächigen Auflage des Klemmhalters auf der grundkörperseitigen Auflagefläche verringern sich die Spannungen im Grundkörper, so dass auch geringerer Verzug zu erwarten ist. Insgesamt kann durch diese Maßnahmen der Kraftfluss von der Funktionsschneide zum Trägerkörper noch weiter optimiert werden.

In einer bevorzugten Ausführungsform kann der Grundkörper des Weiteren eine Führungsöffnung aufweisen, die die Spannpratze, z.B. durch einen Formschluss, zum Klemmhalter hin linear führt. Durch eine formschlüssige Führung der Spannpratze in der Führungsöffnung wird erreicht, dass die Spannpratze nur in einer Richtung, d.h. der Führingsrichtung, aaus der Führungsöffnung entfernbar ist. Selbst wenn die Spannschraube zur Demontage vollständig gelöst wird, kann daher die Spannpratze in einer Richtung quer zur Führingsrichtung in der Führungsöffnung gehalten werden.

Wenn das Zerspanungswerkzeug sowohl die vorstehend erwähnte Aufnahmetasche als auch die Führungsöffnung aufweist, die die Spannpratze linear führt, ist es besonders vorteilhaft, wenn die Erstreckungsrichtung der Führungsöffnung derart zu der Auflagefläche der Aufnahmetasche geneigt ist, dass die Spannpratze den Klemmhalter über den Schneideinsatz gegen einen grundkörperseitigen Anschlag drückt. Dieser grundkörperseitige Anschlag kann ein Einstellelement, z. B. eine Stellschraube, einer grundkörperseitig vorgesehenen Einstelleinrichtung sein, die eine axiale und/oder radiale Lageeinstellung des Klemmhalters am Grundkörper ermöglicht. Durch eine geeignete Wahl des Neigungswinkels der Erstreckungsrichtung der Führungsöffnung gegenüber der Auflagefläche der Aufnahmetasche kann bei einer Verspannung zwischen Spannpratze und Klemmhalter eine Kraftkomponente erzeugt werden, die den Klemmhalter gegen den oben erwähnten grundkörperseitigen Anschlag drückt.

Die vorstehend beschriebenen Maßnahmen tragen zu einer hohen Lagegenauigkeit des Klemmhalters am Grundkörper und einer einfachen Montage bei.

Die Festlegung des Klemmhalters am Grundkörper (nach erfolgter Lageeinstellung) kann über eine von der Spannpratze unabhängige, in den Grundkörper integrierte Festlegeeinrichtung erfolgen. Diese Festlegeeinrichtung kann aus einer mit dem Grundkörper verschraubten Klemmschraube gebildet sein, die den Klemmhalter gegen den Grundkörper drückt. Wie bereits erwähnt, wird durch die spannpratzenunabhängige Festlegung des Klemmhalters am Grundkörper erreicht, dass selbst dann, wenn die Spannpratze gelöst wird, der Klemmhalter unverändert seine in axialer und/oder radialer Richtung eingestellte Lage im Grundkörper beibehält. Ist der Klemmhalter derart festgelegt, kann der Schneideinsatz, beispielsweise eine Schneidplatte, durch Lockern oder Lösen der Spannpratze vom Klemmhalter entfernt werden, ohne den Klemmhalter aus dem Grundkörper entfernen zu müssen. Dadurch ist es möglich, bei Bedarf nur den Schneideinsatz zu wechseln, ohne anschließend das gesamte Werkzeug neu justieren zu müssen. Die Verwendung einer Klemmschraube zur Festlegung des Klemmhalters am Grundkörper trägt dazu bei, die Kosten für das Zerspanungswerkzeug insgesamt gering zu halten.

Im Interesse einer möglichst genauen Positionierung des Schneideinsatzes in axialer und/oder radialer Richtung am Grundkörper kann der Schneideinsatz in einem Schneideinsatzsitz am Klemmhalter relativ zum Klemmhalter, z.B. durch einen Formschluss, lageunveränderlich angeordnet sein. Ist der Schneideinsatz am Klemmhalter lageunveränderlich angeordnet, kann er einfach entfernt und wieder eingebaut werden, insbesondere wenn der Klemmhalter am Grundkörper fixiert ist.

Insbesondere in dieser Ausführungsform kann der Schneideinsatz, wie bereits erwähnt, zweckmäßig durch eine Schneidplatte, im Besonderen eine Wendeschneidplatte, gebildet sein. Derartige Schneidplatten sind in der Zerspanung als Komponenten von entsprechenden Werkzeugen gut bekannt.

Zur axialen und/oder radialen Lageeinstellung des Klemmhalters kann das erfindungsgemäße Zerspanungswerkzeug eine in den Klemmhalter integrierte Einstelleinrichtung zur Einstellung der radialen und/oder axialen Lage des Klemmhalters relativ zur Längsmittelachse des Grundkörpers aufweisen. Beispielsweise ist die klemmhalterseitige Einstelleinrichtung aus einer mit dem Klemmhalter verschraubten, gegen den Grundkörper drückenden Stellschraube gebildet. Durch die Untersetzung des Schraubengewindes gegenüber der Verschiebung der Stellschraube in ihrer Achsrichtung und die zusätzlich mögliche Anpassung des Keilwinkels der Spitze der Stellschraube und des Klemmhalters ist eine feinfühlige Justierung möglich.

Alternativ oder zusätzlich zu der oben erwähnten klemmhalterseitig vorgesehenen Einstelleinrichtung kann das Zerspanungswerkzeug eine in den Grundkörper integrierte Einstelleinrichtung zur Einstellung der radialen und/oder axialen Lage des Klemmhalters relativ zur Längsmittelachse aufweisen. Eine derartige Einstelleinrichtung kann aus einer mit dem Grundkörper verschraubten, gegen den Klemmhalter drückenden Stellschraube gebildet sein. Auch diese Einstelleinrichtung dient letztlich einer Verkürzung von Umrüstzeiten durch die definierte Aufnahme des Klemmhalters im Grundkörper.

Im Folgenden wird die Erfindung mit Hilfe der beigefügten Zeichnungen anhand einer bevorzugten Ausführungsform erläutert. In den Zeichnungen zeigt
Fig. 1 eine teilweise längsgeschnittene Ansicht eines erfindungsgemäßen Zerspanungswerkzeugs;
Fig. 2 eine perspektivische Seitenansicht des erfindungsgemäßen Zerspanungswerkzeugs;
Fig. 3 eine Draufsicht einer aus einem Klemmhalter, einem Schneideinsatz und einer Spannpratze gebildeten Anordnung, die an einem Grundkörpers des Zerspanungswerkzeugs lageeinstellbar angeordnet ist;
Fig. 4 eine Seitenansicht der in Fig. 3 gezeigten Anordnung, und
Fig. 5 eine Vorderansicht der in Fig. 3 gezeigten Anordnung.

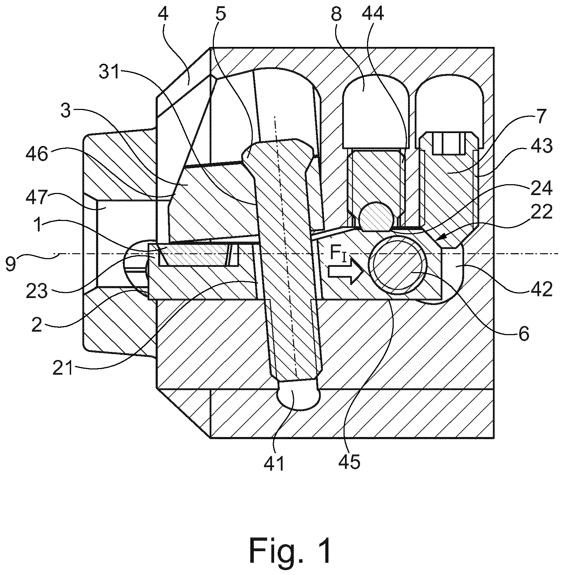

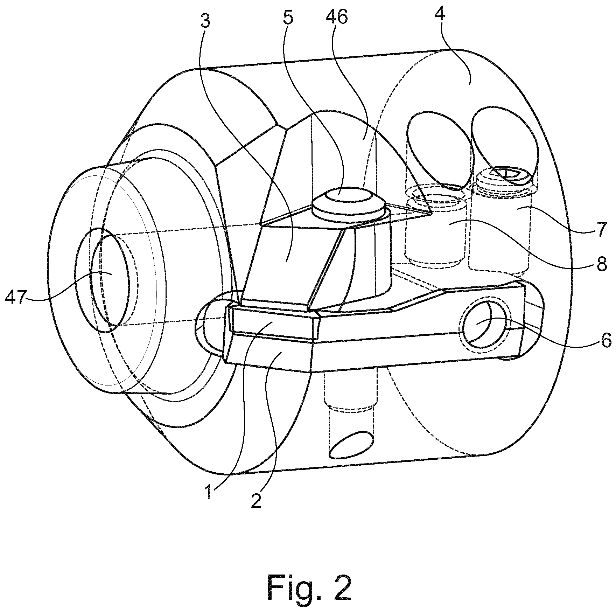

Das in Fig. 1 und 2 gezeigte Zerspanungswerkzeug, das beispielsweise für eine Dreh-, Bohr- oder Fräsbearbeitung einsetzbar ist, hat einen in den Figuren nur unvollständig gezeigten Grundkörper 4, der sich entlang einer Dreh- oder Längsmittelachse 9 erstreckt. Der Grundkörper 4 ist wie aus den Figuren 1 und 2 erkennbar aus einem im Wesentlichen rotationssymmetrischen Körper gebildet. Obwohl dies hier nicht gezeigt ist, kann der Grundkörper 4 in einer dem Fachmann an sich bekannten Weise einen Schaftabschnitt mit beispielsweise einem HSK (Hohlschaftkegel)-Schaft zur Ankoppelung des Zerspanungswerkzeugs an eine Antriebsspindel einer Werkzeugmaschine aufweisen. Die Fig. 1 und 2 zeigen, dass der Grundkörper nach dem Vorbild der aus DE 101 44 923 A1 bekannten Zerspanungswerkzeugs eine zentrische Aufnahmeöffnung 47 zur Aufnahme eines hier nicht gezeigten weiteren Zerspanungswerkzeugs, z.B. eine Reibahle, aufweist.

Daneben erkennt man in Fig. 1 und 2 eine im Folgenden ausführlicher beschriebene Anordnung, die aus einem Schneideinsatz (hier in Form einer Schneidplatte 1), einem Klemmhalter 2 und einer Spannpratze 3 gebildet und am Grundkörper lageeinstellbar angeordnet ist.

Der Schneideinsatz ist in der bevorzugten Ausführungsform als eine Schneidplatte 1, insbesondere als Wendeschneidplatte, ausgebildet. In der gezeigten Ausführungsform ist die Schneidplatte 1 durch einen Formschluss lageunveränderlich in einem Schneideinsatzsitz 23 an einem Klemmhalter 2 angeordnet.

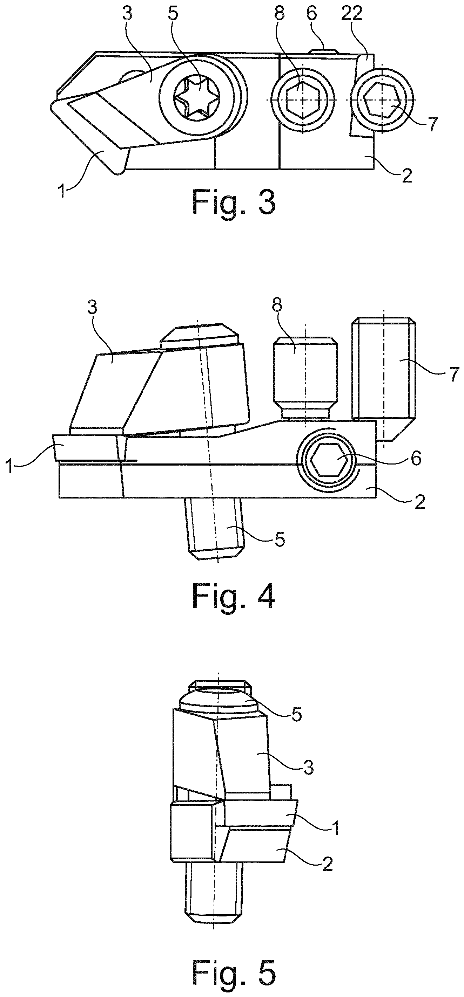

Der Klemmhalter 2 weist eine an ein Quader angelehnte Außenform auf. Wie insbesondere in den Figuren 1 und 3 erkennbar ist der Klemmhalter 2 im vorderen (in den Figuren linken) und hinteren (rechten) Abschnitt nahezu vollständig quaderförmig, wobei der hintere Abschnitt aufgrund eines keilförmigen mittleren Abschnitts eine größere Dicke als der vordere Abschnitt aufweist.. Auf der hinteren Seite (rechts in Fig. 1) weist der Klemmhalter 2 eine muldenförmige Aussparung 24 auf, in der eine Druckstück einer (später beschriebenen) Klemmschraube 8 angeordnet ist. In einer nicht gezeigten Abwandlung kann der Klemmhalter 2 über seine ganze Länge beispielsweise keilförmig ausgebildet sein.

Die Schneidplatte 1 ist durch einen Formschluss lageunveränderlich in einem Schneideinsatzsitz 23 am Klemmhalter 2 aufgenommen. Dadurch liegt die Schneidplatte 1 relativ zum Klemmhalter 2 eindeutig fest. Mittels der Spannschraube 5 wird die Spannpratze 3 auf die Schneidplatte 1 gedrückt, um die Schneidplatte 1 gegen den Klemmhalter 2 zu spannen.

Der Grundkörper 4 weist ein Spanngewinde 41 für die Spannschraube 4, eine Aufnahmetasche 42 für den Klemmhalter 2 (mit einer ebenen Auflagefläche 45 für den Klemmhalter, eine Gewindebohrung 43 für eine (später erläuterte) Stellschraube 7, eine Gewindebohrung 44 für eine (später erläuterte) Klemmschraube 8, eine zentrische Aufnahmeöffnung 47 für ein weiteres Werkzeug und eine Führungsöffnung 46 für die Spannpratze 3 auf. Wie aus den Figuren 1 und 2 zu erkennen ist, kann die Spannpratze 3 in einer linearen Richtung (in den Figuren 1 und 2 von oben) in den Grundkörper eingebracht und über die Spannschraube 5 gegen diesen verspannt werden.

Der Klemmhalter 2 ist in der Aufnahmetasche 42 im Grundkörper 4 aufgenommen, die den Klemmhalter 2 so aufnimmt, dass er in einer Richtung quer zur Längsmittelachse 9 (in der Fig. 1 senkrecht zur Zeichenebene) einschiebbar und in radialer und axialer Richtung lageeinstellbar ist. Eine (später erläuterte) Stellschraube 6 justiert den Klemmhalter gegen den Grundkörper 4 in einer Richtung quer zur Längsmittelachse 9 bzw. in radialer Richtung des Grundkörpers 4.

Die Aufnahmetasche 42 im Grundkörper 4 ist der Außenform des Klemmhalters 2 formähnlich so aufgebaut, dass der Klemmhalter 2 in der Richtung quer zur Längsmittelachse 9 eingeschoben werden kann. Aufgrund der beiden quaderförmigen Abschnitte und des diese verbindenden keilförmigen mittleren Abschnitts ist der Klemmhalter 2 in der Aufnahmetasche in axialer Richtung zwar begrenzt verschiebbar, aber verliersicher angeordnet. Analog zur vorstehend erläuterten Aufnahmetasche für den Klemmhalter 2 ist in der Ausführungsform auch eine Führungsöffnung für die Spannpratze 3 vorgesehen. Die Führungsöffnung geht in die Aufnahmetasche 42 für den Klemmhalter 2 über und führt die Spannpratze 3 geradlinig zum Klemmhalter 2 hin.

Eine in eine Gewindebohrung 44 im Grundkörper 4 eingeschraubte Klemmschraube 8 klemmt den Klemmhalter 2 nach einer erfolgten axialen und/oder radialen Lageeinstellung gegen den Grundkörper 4. Die Klemmschraube 8 ist als eine Madenschraube ausgeführt.

Die Figuren 1 bis 5 zeigen die Spannpratze 3.Wie aus den Figuren erkennbar bildet die Außenform der Spannpratze 3 einen prismatischen Quader, der auf der einen Seite (rechts in den Figuren 1, 3 und 4) in einem Halbzylinder um ein Durchgangsloch 31 für die Spannschraube 5 endet, und auf seiner anderen Seite (links in den Figuren 1 bis 4) in eine abgeschrägt prismatische Fläche übergeht. Zudem verjüngt sich die Spannpratze in der Draufsicht der Fig. 3 zur anderen Seite. Die gezeigte Form hat den Vorteil einer hohen Stabilität bei vergleichsweise geringem Platzbedarf; allerdings kann die Spannpratze auch abhängig von den Gegebenheiten am Werkzeug anders gestaltet sein, so lange sie zuverlässig eine von der Spannschraube 5 ausgeübte Kraft auf die Schneidplatte 1 überträgt und diese sicher hält.

Die Spannpratze 3 wird in der Ausführungsform mittels einer Spannschraube 5 über die Schneidplatte 1 auf den Klemmhalter 2 gedrückt. Wie in der Fig. 1 erkennbar geht die Spannschraube 5 durch das Durchgangsloch 31 in der Spannpratze 3 und ein weiteres Durchgangsloch 21 im Klemmhalter 2, um in das Spanngewinde 41 im Grundkörper 4 eingeschraubt zu sein. Die Spannpratze 3 drückt gegen die Schneidplatte 1. Das Durchgangsloch 31 weist wie in Fig. 1 erkennbar eine Kegelsenkung auf, so dass die die Spannschraube 5 beim Anziehen in der Spannpratze 3 zentriert wird. Wie aus Fig. 1 erkennbar sind die Durchgangslöcher 21, 31 und das Gewindeloch 41 gegen die Radialrichtung des Grundkörpers so geneigt, dass die Spannschraube 5 die Spannpratze 5 leicht schräg derart spannt, dass diese auf der Vorderseite (Fig. 1: links) weiter unten und auf der Schneidplatte 1 aufliegt. Dadurch ergibt sich neben einer (nicht in der Figur gezeigten) Hauptkraftkomponente, die die Spannpratze 3 in radialer Richtung auf die Schneidplatte 1 und dadurch die Schneidplatte 1 auf den Klemmhalter 2 und den Klemmhalter 2 auf die Auflagefläche 45 im Grundkörper 4 drückt, am Auflagepunkt der Spannpratze 3 auf dem Schneideinsatz 1 eine (kleinere) Kraftkomponente F_{J}, die die Schneidplatte 1 in den Schneideinsatzsitz am Klemmhalter 2 und außerdem den Klemmhalter 2 in axialer Richtung gegen die Stellschraube 7 drückt. Zur übersichtlicheren Verdeutlichung ist diese Kraftkomponente in der Fig. 1 nicht am Ort ihres Entstehens, sondern im Klemmhalter 2 eingezeichnet, auf den sie wirkt.

Als Einstelleinrichtungen zur axialen und/oder radialen Lageeinstellung sind die Stellschrauben 6 und 7 vorgesehen.

Die Stellschraube 7 ist in die Gewindebohrung 43 im Grundkörper 4 eingeschraubt und drückt gegen eine zugehörige hintere Keilfläche 22 des Klemmhalters 2. Wird die Stellschraube 7 weiter eingeschraubt bzw. zugestellt, drückt sie den Klemmhalter 2 und die mit ihm verbundene Schneidplatte 1 über die Keilfläche 22 nach vorn (in der Fig. 1 nach links). Wie aus Fig. 3 erkennbar, ist die Keilfläche 22 außerdem windschief am Klemmhalter 2 so gestaltet, dass bei Zustellen der Stellschraube 7 der Klemmhalter 2 gleichzeitig auch in die Aufnahmetasche 42 hinein (in Fig. 1 senkrecht in die Zeichenebene hinein, in Fig. 3 nach oben) verdrängt wird. Dadurch ist der Klemmhalter 2 zum einen in der Aufnahmetasche 42 und zum anderen gegen die Stellschraube 6 verspannt. Über die Stellschraube 6 kann dabei die vorstehend beschriebene Verstellung in die Aufnahmetasche 42 hinein eingeschränkt werden. Diese Stellschraube 7 dient als ein oben erwähnter grundkörperseitiger Anschlag, der die vorstehend erwähnte Kraft F_{J} aufnimmt.

Die Stellschraube 6 wird nach der axialen Ausrichtung des Klemmhalters 2 durch die Stellschraube 7 soweit eingeschraubt, dass sie den Klemmhalter 2 in radialer Richtung festlegt, indem sie gegen eine radiale Anschlagfläche in der Aufnahmetasche 42 drückt. Dadurch verschiebt bzw. verspannt sie den Klemmhalter 2 in radialer Richtung gegen den Grundkörper 4 und die Stellschraube 7.

Nach der vorstehend erläuterten axialen und/oder radialen Lageeinstellung mittels der Stellschrauben 6 und 7 wird der Klemmhalter 2 mittels der Klemmschraube 8, die über ein Druckstück gegen den Boden der muldenförmigen Aussparung 24 im Klemmhalter 2 drückt, festgelegt. In diesem Zustand kann die Schneidplatte 1 mittels der Spannpratze 3 gespannt werden, wodurch der Klemmhalter 2 eine zusätzliche Verspannung gegen den Grundkörper erfährt.

Während die Stellschrauben 6 und 7 wie vorstehend erläutert die Ausrichtung des Klemmhalters 2 und dadurch des Schneideinsatzes 1 festlegen, zentriert die Spannschraube 5 in der Spannpratze 3 diese beim Festziehen über eine Kegelsenkung im oberen Abschnitt des Durchgangslochs 31 in der Spannpratze 3. Durch diese Zentrierung und den zusätzlichen Formschluss in der Führungsöffnung ist die Position der Spannpratze 3 im Grundkörper 4 eindeutig festgelegt. Zudem dringt die Spannschraube 5 wie aus Fig. 1 erkennbar mit vergleichsweise großem Spiel durch das Loch 21 im Klemmhalter 2. Daher kann der Klemmhalter 2 ohne Störung durch die Spannschraube 5 ausgerichtet und dann die Spannschraube 5 problemlos angezogen werden, nachdem der Klemmhalter und die Schneidplatte an der gewünschten Position liegen. Durch das Anziehen verspannt die Spannpratze 3 den Klemmhalter 2 gegenüber dem Grundkörper 4.

Wie aus der vorstehenden Beschreibung und der Fig. 1 zu erkennen ist, ergibt sich durch die hier gezeigte Ausführungsform eine statische Überbestimmung der Festlegung des Klemmkörpers 2 und der darin lageunveränderlich angeordneten Schneidplatte 1 relativ zum Grundkörper 4. Daher kann wahlweise, falls erforderlich, die Spannschraube 5 (und damit die Spannpratze 3), die Stellschraube 6 oder die Stellschraube 7 gelöst werden, ohne die Lage der Schneidplatte 1 zu verändern, weil über die Klemmschraube 8 der Klemmhalter weiter sicher gehalten wird. Umgekehrt ändert sich die Lage der Schneidplatte 1 auch nicht, wenn die Klemmschraube 8 gelöst wird, während die Spannschraube 5 sowie beide Stellschrauben 6 und 7 unverändert bleiben.

Fig. 2 zeigt eine perspektivische Seitenansicht des erfindungsgemäßen Zerspanungswerkzeugs. In Fig. 2 kann man deutlicher als in Fig. 1 die Aufnahmeöffnung 47 für eventuelle Zusatzwerkzeuge sowie aufgrund der perspektivischen Darstellung die Form der Spannpratze 3 und der zugehörigen Führungsöffnung erkennen. Wie aus dieser Figur erkennbar, kann die Spannpratze 3 in der in Fig. 2 gezeigten Ausführungsform von oben, nämlich in der Richtung der Achse der Spannschraube 5, in die Führungsöffnung eingeführt werden. Wenn die Spannpratze 3 und die zugehörige Führungsöffnung, wie noch besser aus Fig. 3 und 5 erkennbar, sich darüber hinaus vom Ort des Durchgangslochs 31 für die Spannschraube 5 hin zur Auflage auf dem Schneideinsatz verjüngt, kann sich die Spannpratze 3 im Wesentlichen nur in einer Richtung, nämlich der Achsrichtung der Spannschraube, relativ zum Grundkörper 4 bewegen.

Fig. 3 zeigt eine Draufsicht der aus dem Schneideinsatz 1, dem Klemmhalter 2, der Spannpratze 3 und den Spann-, Stell- und Klemmschrauben 5 bis 8 gebildeten Anordnung, die an einem Grundkörper des Zerspanungswerkzeugs lageeinstellbar angeordnet ist, also einer Anordnung aller im Grundkörper 4 aufgenommenen Teile, wobei der Grundkörper 4 selbst zur Vereinfachung weggelassen ist. Aus Fig. 3 ist besser erkennbar, dass die bereits mit Bezug auf Fig. 1 erwähnte Keilfläche 22 zur Längsachse des Grundkörpers 4 und des dazu parallel ausgerichteten Klemmhalters 2 schräg verläuft. Dadurch kann durch Einschrauben ("Zustellen") der Stellschraube 7 der Klemmhalter 2 radial zum Grundkörper 4, nämlich in Fig. 3 nach oben, und gleichzeitig (vgl. Fig. 1) nach vorn, also in den Figuren 1 bis 3 nach links, verschoben werden. Sobald die Stellschraube 7 in die durch die Einstellfläche 22 begrenzte Tasche des Klemmhalters 2 ragt, ist der Klemmhalter 2 außerdem durch diese Schraube 7 gegen Herausfallen gesichert und wird durch sie justiert.

Fig. 4 stellt eine Seitenansicht der in Fig. 3 gezeigten Anordnung dar, und Fig. 5 offenbart eine Vorderansicht der in Fig. 3 gezeigten Anordnung. Fig. 4 zeigt zur Verdeutlichung der Funktionsweise die Schneidplatte 1, den Klemmhalter 2, die Spannpratze 3 und die Spann-, Stell- und Klemmschrauben 5 bis 8 im zusammengebauten Zustand in einer Ansicht von derselben Seite wie Fig. 1, allerdings ungeschnitten, während der Grundkörper 4 zur Vereinfachung ähnlich wie vorstehend für Fig. 3 erläutert weggelassen ist. Im Unterschied zur Fig. 1 ist daher beispielsweise auch der Kopf der (in Fig. 1 geschnittenen) Stellschraube 6 zu sehen. Wie sich aus Fig. 4 erkennen lässt, ist die Stellschraube 6 wie die vorstehend erörterte Stellschraube 7 und Klemmschraube 8 in dieser Ausführungsform als Madenschraube gestaltet.

## Patentansprüche

1. Zerspanungswerkzeug mit einem sich entlang einer Längsmittelachse (9) erstreckenden Grundkörper (4) und einem am Grundkörper (4) radial lageeinstellbar gehaltenen Schneideinsatz (1), der mittels einer Spannpratze (3) spannbar ist, der Schneideinsatz (1) von einem am Grundkörper (4) lageeinstellbar festgelegten Klemmhalter (2) gehalten wird, der durch die gegen den Schneideinsatz (1) drückende Spannpratze (3) gegen den Grundkörper (4) spannbar ist, der Grundkörper (4) eine Aufnahmetasche (42) aufweist, die den Klemmhalter (2) in einer Richtung quer zur Längsmittelachse (9) verschiebbar aufnimmt, und die Aufnahmetasche (42) den Klemmhalter (2) in axialer Richtung verliersicher aufnimmt, **dadurch gekennzeichnet, dass**
der Schneideinsatz (1) am Grundkörper (4) axial lageeinstellbar gehalten ist.

2. Zerspanungswerkzeug nach Anspruch 1, **dadurch gekennzeichnet, dass** die Spannpratze (3) durch eine den Klemmhalter (2) durchdringende Spannschraube (5) mit dem Grundkörper (4) verschraubt ist.

3. Zerspanungswerkzeug nach Anspruch 1 oder 2, **dadurch gekennzeichnet, dass** der Klemmhalter (2) flächig gegen eine sich in Verschieberichtung des Klemmhalters (2) erstreckende, vorzugsweise ebene, Auflagefläche (45) der Aufnahmetasche (42) spannbar ist.

4. Zerspanungswerkzeug nach einem der vorhergehenden Ansprüche, **dadurch gekennzeichnet, dass** der Grundkörper (4) eine Führungsöffnung (46) aufweist, die die Spannpratze (3) zum Klemmhalter (2) hin linear führt.

5. Zerspanungswerkzeug nach Anspruch 3 und 4, **dadurch gekennzeichnet, dass** die Erstreckungsrichtung der Führungsöffnung (46) derart gegenüber der Auflagefläche (45) der Aufnahmetasche (42) geneigt ist, dass die Spannpratze (3) den Klemmhalter (2) gegen einen grundkörperseitigen Anschlag drückt.

6. Zerspanungswerkzeug nach Anspruch 4 oder 5, **dadurch gekennzeichnet, dass** die Führungsöffnung (46) die Spannpratze (3) formschlüssig führt.

7. Zerspanungswerkzeug nach einem der vorhergehenden Ansprüche, **gekennzeichnet durch** eine von der Spannpratze (3) unabhängige, in den Grundkörper (4) integrierte Festlegeeinrichtung (8) zum Fixieren des Klemmhalters (2) am Grundkörper (4).

8. Zerspanungswerkzeug nach Anspruch 7, **dadurch gekennzeichnet, dass** die Festlegeeinrichtung (8) aus einer mit dem Grundkörper (4) verschraubten, den Klemmhalter (2) gegen den Grundkörper (4) drückenden Klemmschraube (8) gebildet ist.

9. Zerspanungswerkzeug nach einem der vorhergehenden Ansprüche, **dadurch gekennzeichnet, dass** der Schneideinsatz (1) in einem Schneideinsatzsitz (23) am Klemmhalter (2) relativ zum Klemmhalter (2) lageunveränderlich angeordnet ist.

10. Zerspanungswerkzeug nach einem der vorhergehenden Ansprüche, **dadurch gekennzeichnet, dass** der Schneideinsatz von einer Schneidplatte (1), im Besonderen einer Wendeschneidplatte, gebildet ist.

11. Zerspanungswerkzeug nach einem der vorhergehenden Ansprüche, **gekennzeichnet durch** eine in den Klemmhalter (2) integrierte Einstelleinrichtung (6) zur Einstellung der radialen und/oder axialen Lage des Klemmhalters relativ zur Längsmittelachse (9).

12. Zerspanungswerkzeug nach Anspruch 11, **dadurch gekennzeichnet, dass** die Einstelleinrichtung (6) aus einer mit dem Klemmhalter (2) verschraubten, gegen den Grundkörper (4) drückenden Stellschraube (6) gebildet ist.

13. Zerspanungswerkzeug nach einem der vorhergehenden Ansprüche, **gekennzeichnet durch** eine in den Grundkörper (4) integrierte Einstelleinrichtung (7) zur Einstellung der radialen und/oder axialen Lage des Klemmhalters (2) relativ zur Längsmittelachse (9).

14. Zerspanungswerkzeug nach Anspruch 13, **dadurch gekennzeichnet, dass** die Einstelleinrichtung (7) aus einer mit dem Grundkörper (4) verschraubten, gegen den Klemmhalter (2) drückenden Stellschraube (7) gebildet ist.

## Claims

1. Cutting tool having a base body (4) extending along a longitudinal central axis (9) and a cutting insert (1) held on the base body (4) in a radially adjustable position, the cutting insert (1) being clampable by means of a clamping claw (3) and being held by a clamping holder (2) fixed to the base body (4) in a positionally adjustable manner, wherein the clamping holder (2) is clampable against the base body (4) by the clamping claw (3) pressing against the cutting insert (1), the base body (4) having a receiving pocket (42) which receives the clamping holder (2) in a manner such that it can be displaced in a direction transverse to the longitudinal central axis (9), and the receiving pocket (42) receives the clamping holder (2) in a captive manner in the axial direction, **characterized in that**
the cutting insert (1) is held on the base body (4) in an axially adjustable position.

2. Cutting tool according to claim 1, **characterized in that** the clamping claw (3) is screwed to the base body (4) by means of a clamping screw (5) penetrating the clamping holder (2).

3. Cutting tool according to claim 1 or 2, **characterized in that** the clamping holder (2) is clampable flat against a preferably flat bearing surface (45) of the receiving pocket (42), the bearing surface (45) extending in the direction of displacement of the clamping holder (2).

4. Cutting tool according to one of the preceding claims, **characterized in that** the base body (4) has a guide opening (46) which guides the clamping claw (3) linearly with respect to the clamping holder (2).

5. Cutting tool according to claims 3 and 4, **characterized in that** the extending direction of the guide opening (46) is inclined with respect to the bearing surface (45) of the receiving pocket (42) in such a way that the clamping claw (3) presses the clamping holder (2) against a stop on the base body side.

6. Cutting tool according to claim 4 or 5, **characterized in that** the guide opening (46) guides the clamping claw (3) in a form-fitting manner.

7. Cutting tool according to one of the preceding claims, **characterized by** a fixing device (8) for fixing the clamping holder (2) to the base body (4), the fixing device (8) being independent of the clamping claw (3) and integrated into the base body (4).

8. Cutting tool according to claim 7, **characterized in that** the fixing device (8) is formed by a clamping screw (8) which is screwed to the base body (4) and presses the clamping holder (2) against the base body (4).

9. Cutting tool according to one of the preceding claims, **characterized in that** the cutting insert (1) is arranged in a cutting insert seat (23) on the clamping holder (2) such as to be fixed in position relative to the clamping holder (2).

10. Cutting tool according to one of the preceding claims, **characterized in that** the cutting insert is formed by a cutting plate (1), in particular an indexable insert.

11. Cutting tool according to one of the preceding claims, **characterized by** an adjusting device (6) integrated into the clamping holder (2) for adjusting the radial and/or axial position of the clamping holder relative to the longitudinal central axis (9).

12. Cutting tool according to claim 11, **characterized in that** the adjusting device (6) is formed by an adjusting screw (6) screwed to the clamping holder (2) and pressing against the base body (4).

13. Cutting tool according to one of the preceding claims, **characterized by** an adjusting device (7) integrated into the base body (4) for adjusting the radial and/or axial position of the clamping holder (2) relative to the longitudinal central axis (9).

14. Cutting tool according to claim 13, **characterized in that** the adjusting device (7) is formed by an adjusting screw (7) screwed to the base body (4) and pressing against the clamping holder (2).

## Revendications

1. Outil d'usinage par enlèvement de copeaux avec un corps de base (4) s'étendant le long d'un axe médian longitudinal (9) et un insert de coupe (1) maintenu radialement dans une position réglable sur le corps de base (4), insert qui peut être serré au moyen d'une griffe de serrage (3), l'insert (1) est maintenu par un support de serrage (2) fixé dans une position réglable sur le corps de base (4), support qui peut être serré contre le corps de base (4) par la griffe de serrage (3) pressant contre l'insert de coupe (1), le corps de base (4) présente une poche de réception (42) qui reçoit de manière déplaçable le support de serrage (2) dans un sens transversal à l'axe médian longitudinal (9), et la poche de réception (42) reçoit de manière imperdable le support de serrage (2) dans le sens axial, **caractérisé en ce que**
l'insert de coupe (1) est maintenu dans une position réglable axialement sur le corps de base (4).

2. Outil d'usinage par enlèvement de copeaux selon la revendication 1, **caractérisé en ce que** la griffe de serrage (3) est vissée au corps de base (4) par une vis de serrage (5) pénétrant le support de serrage (2).

3. Outil d'usinage par enlèvement de copeaux selon la revendication 1 ou 2, **caractérisé en ce que** le support de serrage (2) peut être serré à plat contre une surface d'appui (45), de préférence plane, de la poche de réception (42) s'étendant dans le sens de déplacement du support de serrage (2).

4. Outil d'usinage par enlèvement de copeaux selon l'une quelconque des revendications précédentes, **caractérisé en ce que** le corps de base (4) présente une ouverture de guidage (46) qui mène linéairement la griffe de serrage (3) vers le support de serrage (2).

5. Outil d'usinage par enlèvement de copeaux selon les revendications 3 et 4, **caractérisé en ce que** le sens d'étendue de l'ouverture de guidage (46) est incliné par rapport à la surface d'appui (45) de la poche de réception (42) de telle manière que la griffe de serrage (3) presse le support de serrage (2) contre une butée côté corps de base.

6. Outil d'usinage par enlèvement de copeaux selon la revendication 4 ou 5, **caractérisé en ce que** l'ouverture de guidage (46) mène la griffe de serrage (3) par complémentarité de formes.

7. Outil d'usinage par enlèvement de copeaux selon l'une quelconque des revendications précédentes, **caractérisé par** un appareil de fixation (8) indépendant de la griffe de serrage (3), intégré dans le corps de base (4) pour la fixation du support de serrage (2) au corps de base (4).

8. Outil d'usinage par enlèvement de copeaux selon la revendication 7, **caractérisé en ce que** l'appareil de fixation (8) est formé à partir d'une vis de serrage (8) vissée au corps de base (4), pressant le support de serrage (2) contre le corps de base (4).

9. Outil d'usinage par enlèvement de copeaux selon l'une quelconque des revendications précédentes, **caractérisé en ce que** l'insert de coupe (1) est agencé dans une position invariable dans un siège d'insert de coupe (23) au niveau du support de coupe (2) par rapport au support de serrage (2).

10. Outil d'usinage par enlèvement de copeaux selon l'une quelconque des revendications précédentes, **caractérisé en ce que** l'insert de coupe est formé par une plaque de coupe (1), en particulier une plaquette amovible.

11. Outil d'usinage par enlèvement de copeaux selon l'une quelconque des revendications précédentes, **caractérisé par** un appareil de réglage (6) intégré dans le support de serrage (2) pour le réglage de la position radiale et/ou axiale du support de serrage par rapport à l'axe médian longitudinal (9).

12. Outil d'usinage par enlèvement de copeaux selon la revendication 11, **caractérisé en ce que** l'appareil de réglage (6) est formé à partir d'une vis de réglage (6) vissée au support de serrage (2), pressant contre le corps de base (4).

13. Outil d'usinage par enlèvement de copeaux selon l'une quelconque des revendications précédentes, **caractérisé par** un appareil de réglage (7) intégré dans le corps de base (4) pour le réglage de la position radiale et/ou axiale du support de serrage (2) par rapport à l'axe médian longitudinal (9).

14. Outil d'usinage par enlèvement de copeaux selon la revendication 13, **caractérisé en ce que** l'appareil de réglage (7) est formé à partir d'une vis de réglage (7) vissée au corps de base (4), pressant contre le support de serrage (2).
